# EUROPÄISCHE PATENTSCHRIFT

(11) **EP 0 695 399 B1**
(45) Veröffentlichungstag und Bekanntmachung des Hinweises auf die Patenterteilung: **20.08.1997**
(21) Anmeldenummer: 94912462.2
(22) Anmeldetag: 15.04.1994
(51) Int. Cl.: F16B 5/04, F16B 19/08

(54) **VORRICHTUNG ZUM VERBINDEN FLÄCHIGER TEILE**
DEVICE FOR JOINING FLAT COMPONENTS
DISPOSITIF POUR L'ASSEMBLAGE DE PIECES PLATES

(30) Priorität: 23.04.1993 DE 4313249
(43) Veröffentlichungstag der Anmeldung: 07.02.1996
(73) Patentinhaber: MAHLKOW, Gerhard, D-69214 Eppelheim (DE)
(72) Erfinder: MAHLKOW, Gerhard, D-69214 Eppelheim (DE)
(74) Vertreter: Naumann, Ulrich, Dr.-Ing.
(86) Internationale Anmeldenummer: DE9400422
(87) Internationale Veröffentlichungsnummer: WO9425762

(56) Entgegenhaltungen:
- EP-A- 0 168 355
- DE-A- 1 750 177
- DE-A- 2 430 535
- DE-A- 2 442 292
- DE-A- 2 607 689

## Beschreibung

Die Erfindung betrifft eine Vorrichtung zum Verbinden flächiger Teile, mit einem durch in den Teilen ausgebildete Durchgänge hindurchsteckbaren, vorzugsweise als zylindrischer Hohlkörper ausgeführten Bolzen und einem an einem Ende des Bolzens ausgebildeten, zur Anlage an das äußere Teil dienenden Setzkopf, wobei der Bolzen elastisch und/oder plastisch verformbar ist (DE-A-1 750 177).

Vorrichtungen der in Rede stehenden Art sind seit langem aus der Praxis bekannt. Lediglich beispielhaft wird auf unterschiedliche Ausführungsformen von Nieten hingewiesen. Nieten dienen zum unlösbaren Verbinden von flächigen Teilen, insbesondere von Metallblechen und Profilträgern (an deren flachen Stegen) mittels Bolzen, die in Bohrungen in den sich überlappenden Verbindungsstellen gesteckt und deren Enden danach außerhalb des Materials verbreitert bzw. aufgespreizt werden. Das Niet besitzt meist an einem Ende einen verbreiterten Kopf, den sogenannten Setzkopf. Ein aus dem zylindrischen Ende des Bolzens nach dem Einstecken durch Druck oder Schlag geformte Schließkopf preßt die zu verbindenden Teile zusammen.

Zum Formen des Schließkopfes dienen stets Spezialwerkzeuge mit Stempel, der eine halbkugelige Aussparung besitzt (Schellhammer, meist als Preßlufthammer bezeichnet). Des weiteren werden auch technisch aufwendige Nietmaschinen zur Ausbildung des Schließkopfes verwendet. Kleine Stahlniete sowie Niete aus Nichteisenmetallen werden i.d.R. in kalten Zustand gesetzt. Daher nennt man solche Niete Kalt-Niete. Bei sogenannten Warmnieten werden größere Stahlniete zur leichteren Formung des Schließkopfes auf ca. 800° C erwärmt. Beim Zapf-Niet trägt eines der zu verbindenden Teile herausgearbeitete Zapfen, die beim Verbinden als Niet dienen.

Niete werden besonders bei Maschinen- und Metallkonstruktionen an Stellen angewandt, an denen normalerweise keine Teile ausgewechselt werden müssen, z.B. im Schiffsbau zum Aufbau des Rumpfskeletts und zum Beplanken im Kesselbau, bei der Montage von Stahlgerüsten und schließlich im Flugzeugbau.

Bei der Sprengnietung an unzugänglichen Stellen werden Niete verwendet, deren zylindrisches Schaftende eine kleine Sprengladung enthält, welche bei Erhitzung (z.B. durch Berührung mit dem Lötkolben) explodiert und das Ende aufweitet. Zur Vernietung schwächerer Teile, z.B. von Chassisteilen elektrischer Geräte, von Leder u.ä., dienen vielfach Hohlniete, die kurze Metallröhrchen darstellen, deren Enden durch Eindrücken eines konischen Dorn, z.B. mittels einer Nietzange, aufgeweitet werden.

Mittlerweile werden insbesondere die Hohlniete bzw. Blindniete nicht nur zum Verbinden von Blechen bzw. Metallteilen, sondern auch zum Verbinden jedweder flächiger Teile verwendet. Hinsichtlich bislang realisierter Ausführungsformen wird lediglich beispielhaft auf die deutschen Offenlegungsschriften 24 42 292, 26 07 689, 29 06 205 und 29 08 977 verwiesen. Aus den in Rede stehenden Druckschriften sind bereits aus Kunststoff bestehende Niete bekannt, wobei jedoch abgesehen von dem Betätigungsorgan ganz besondere Werkzeuge erforderlich sind, die nämlich das Betätigungsorgan relativ zu dem Bolzen verlagern bzw. einen Keil oder dgl. in den Bolzen hineindrücken. Folglich ist die Handhabung solcher Vorrichtungen bzw. Niete recht aufwendig, erfordert jedenfalls stets das Mitführen eines besonderen Werkzeuges. Dies macht die schnelle Handhabung nahezu unmöglich und erhöht insbesondere im industriellen Bereich die Kosten je montiertes Niet.

Des weiteren ist wesentlich, daß bei den bekannten Vorrichtungen der in Rede stehenden Art bzw. bei den bekannten Hohl- bzw. Blindniete das Betätigungsorgan stets ein vom Bolzen unabhängig ausgebildetes Bauteil ist. So besteht einerseits die Gefahr des Verlorengehens des Betätigungsorgans, so daß das Niet nicht mehr verwendbar ist. Andererseits führt die zweiteilige Ausgestaltung zu erhöhten Fertigungskosten, wodurch sich die Verbindung mittels solcher Niete abermals verteuert.

Der Erfindung liegt daher die Aufgabe zugrunde, eine Vorrichtung zum Verbinden flächiger Teile der eingangs genannten Art derart auszugestalten und weiterzubilden, daß sie bei einfachster konstruktiver Ausgestaltung einfachst - ohne weitere technische Hilfsmittel - handhabbar ist.

Die erfindungsgemäße Vorrichtung löst die voranstehende Aufgabe durch die Merkmale des Patentanspruches 1. Danach ist die eingangs genannte Vorrichtung derart ausgebildet, daß sich ein am hinteren Ende des Bolzens festgelegtes Betätigungsorgan durch den Bolzen und den Setzkopf hindurch nach außen erstreckt und daß durch Herausziehen des Betätigungsorgans das dem Setzkopf abgewandte - hintere - Ende in den Bolzen hineinziehbar und dadurch der Bolzen aufweitbar bzw. ein Schließkopf bildbar ist.

Erfindungsgemäß ist erkannt worden, daß zur einfachen Ausgestaltung einer Vorrichtung der in Rede stehenden Art das Beätigungsorgan am hinteren Ende des Bolzens festgelegt werden kann. In erfindungsgemäßer Weise erstreckt sich das Betätigungsorgan von dort aus durch den Bolzen und den Setzkopf hindurch nach außerhalb des Bolzens, so daß es mühelos ergriffen und herausgezogen werden kann. Durch Herausziehen des Betätigungsorgans wird nun das dem Setzkopf abgewandte - hintere - Ende des Bolzens in diesen bzw. in dessen innen ausgebildeten Raum hineingezogen, wodurch der Bolzen insgesamt aufgeweitet wird, so daß sich durch das Hineinziehen des hinteren Endes des Bolzens ein Schließkopf ausbildet. Im Falle der Fixierung zweier Teile wird das Betätigungsorgan so weit wie möglich in den Bolzen hineingezogen, bis nämlich aufgrund der zu verbindenden Teile keine weitere Materialverdrängung mehr möglich ist. Dann ist gewährleistet, daß der Schließkopf direkt an das hintere Teil angrenzt, so daß die beiden Teile zwischen Setzkopf und Schließkopf mehr oder weniger fest miteinander verbunden sind.

Hinsichtlich einer konkreten konstruktiven Ausgestaltung ist es von Vorteil, wenn sich das Betätigungsorgan frei beweglich durch den Bolzen und Setzkopf hindurch nach außerhalb des Bolzens erstreckt. Mit anderen Worten ragt das Betätigungsorgan durch den innerhalb des Bolzens zur Aufnahme des hinteren Endes dienenden Raum und ist dort weder geführt noch sonstwie festgelegt. Hinsichtlich einer besonders einfachen Handhabung könnte der Bolzen derart dimensioniert sein, daß das Betätigungsorgan manuell - ohne weitere Werkzeuge - betätigbar ist. Dabei muß stets sichergestellt sein, daß die Steifigkeit des Materials eine manuelle Verformung des Bolzens bzw. ein Hineinziehen des hinteren Endes in den Bolzen und dabei eine Aufweitung der Wandung des Bolzens zuläßt.

Nun könnte das Betätigungsorgan irgendwo seitlich am hinteren Ende des Bolzens - bei durchgehender Bohrung - festgelegt sein. Bei separater Ausgestaltung des Betätigungsorgans käme ein Anklippsen, Verpressen oder Ankleben in Frage. Hinsichtlich einer einfachen Ausgestaltung der hier beanspruchten Vorrichtung ist es jedoch von Vorteil, wenn der Bolzen am hinteren Ende geschlossen und das Betätigungsorgan dort etwa mittig festgelegt ist. Genauer gesagt könnte der innerhalb des Bolzens ausgebildete, sich zum hinteren Ende erstreckende Raum im Sinne eines Sackloches bzw. einer Sackbohrung ausgebildet sein und das Betätigungsorgan könnte sich von dort aus wie ein Tropfen in den Innenraum hinein erstrecken. Zur Verbindung zwischen Betätigungsorgan und Bolzen kämen unterschiedlichste Verbindungstechniken in Frage. So könnte das Betätigungsorgan form- und/oder kraft- und/oder materialschlüssig bzw. adhäsiv mit dem hinteren Ende des Bolzens verbunden sein. In ganz besonders vorteilhafter Weise wäre es jedoch auch denkbar, das Betätigungsorgan als integralen Bestandteil des Bolzens auszubilden. Dabei könnte sich das Betätigungsorgan von der Innenwandung des Bolzens aus zu einem vorzugsweise steifen Stab verjüngen und durch den innerhalb des Bolzens ausgebildeten Raum hindurch erstrecken. Ebenso wäre es jedoch auch denkbar, wenn sich das Betätigungsorgan von der Innenwandung des Bolzens aus zu einem vorzugsweise biegbaren Band, einer biegbaren Lasche, einer Schnur oder dgl. verjüngt und aus dem Bolzen heraus erstreckt.

Nun könnte man in weiter vorteilhafter Weise Mittel vorsehen, die kenntlich machen, daß die erfindungsgemäße Vorrichtung betätigt und nicht mehr geöffnet bzw. gelöst ist. Dazu könnte das Betätigungsorgan zumindest im Bereich des Setzkopfes eine aufgerauhte bzw. geriffelte Oberfläche aufweisen und im betätigten Zustand mittels einer Plombe oder dgl. im Bereich des Setzkopfes bzw. außerhalb des Bolzens festlegbar sein. Insbesondere im Rahmen einer Verwendung der erfindungsgemäßen Vorrichtung als Verschlußmittel bei Verkaufspackungen wäre mit einfachen Mitteln eine Anzeigemöglichkeit für den unversehrten bzw. nicht geöffneten Zustand einer Verkaufspackung geschaffen.

Damit es nach Betätigen der erfindungsgemäßen Vorrichtung nicht erforderlich ist, das aus dem Bolzen herausragende Betätigungsorgan abzuschneiden oder gar herauszureißen, könnte dieses im Bereich innerhalb des Bolzens eine Sollbruchstelle aufweisen, die bei Anliegen einer vorgegebenen Zugkraft ein Abreißen hervorruft. Folglich wäre hier das Betätigungsorgan nach Ausbilden des Schließkopfes mit einer erhöhten Zugkraft zu beaufschlagen, so daß dieses abreißt und von außerhalb des Bolzens nicht mehr sichtbar ist.

Hinsichtlich einer einfachen manuellen Betätigung des Betätigungsorgans ist es von weiterem Vorteil, wenn am freien Ende des Betätigungsorgans ein zum Ergreifen dienendes Griffteil ausgebildet ist. Dabei könnte es sich bei einfachster Konstruktion um einen quer zum Betätigungsorgan verlaufenden Steg, einen Knopf oder um einen sonstwie gestalteten Handgriff handeln, wobei bei kleinster Ausführung der beanspruchten Vorrichtung unter "Griffteil" selbstverständlich ein Teil zu verstehen ist, welcher sich beispielsweise lediglich mit zwei Fingern mühelos ergreifen läßt. Das Griffteil könnte unter Anwendung üblicher Verbindungstechniken mit dem Betätigungsorgan verbunden, jedoch bei einfachster Ausgestaltung auch integraler Bestandteil des Betätigungsorgans sein.

Damit mit der erfindungsgemäßen Vorrichtung eine wirklich haltbare Verbindung geschaffen werden kann, damit beispielsweise ein Herausdrücken des in den Bolzen gezogenen hinteren Endes wirksam vermieden ist, sind an der Innenwandung des Bolzens nach innen abragende Mittel vorgesehen, die bei hineingezogenem hinteren Ende eine mechanische Verhakung oder ein Einrasten und eine ggf. stufenweise Festlegung des hineingezogenen Bereichs des Bolzens bewirken. Diese Mittel könnten als umlaufende Vorsprünge, Nasen, Zähne, Haken oder dgl. ausgebildet sein. Ebenso wäre es jedoch auch denkbar, daß die Innenwandung des Bolzens lediglich aufgerauht ist, so daß bei hineingezogenem hinteren Ende der Reibungskoeffizient zwischen einander berührenden Wandabschnitten derart erhöht ist, daß ebenfalls eine hinreichende Fixierung des in den Bolzen hineingezogenen hinteren Endes gewährleistet ist.

Hinsichtlich einer besonders wirkungsvollen Aufweitung des Bolzens bzw. Ausbildung des Schließkopfes ist es nun von Vorteil, wenn der innerhalb des Bolzens ausgebildete Raum bereits vor dem hinteren Ende des Bolzens endet, so daß das hintere Ende des Bolzens aus Vollmaterial gebildet ist. Dieses würde dann insgesamt in den innerhalb des Bolzens ausgebildeten Raum hineingezogen werden und könnte aufgrund seiner relativ hohen Steifheit ein besonders hohes Maß an Aufweitung der möglicherweise relativ dünn zu dimensionierenden Wandung des Bolzens bewirken. Ebenso wäre es denkbar, wenn das hintere Ende des Bolzens einen sich zum Setzkopf hin erstreckenden Spreizkeil aufweist, an dem sich das Betätigungsorgan direkt anschließt. Mittels des Betätigungsorgans könnte der Spreizkeil vollends in den Bolzen hineingezogen werden und so ebenfalls eine Aufweitung bzw. Ausbildung des Schließkopfes bewirken. Der Spreizkeil könnte sich zu seinem freien Ende hin vorzugsweise konisch verjüngen, so daß die Flanken des Spreizkeils die Aufweitung abermals begünstigen.

Zur weiteren Begünstigung einer hinreichenden Aufweitung bzw. Ausbildung des Schließkopfes könnte sich ungeachtet der Ausgestaltung des hinteren Endes des Bolzens der innerhalb des Bolzens ausgebildete Raum zum Setzkopf hin verjüngen, wobei bei gleichbleibendem Außendurchmesser die Wanddicke zunimmt. Hierdurch wäre letztendlich gewährleistet, daß sich mit zunehmendem Maß des Einziehens ein größerer Schließkopf ausbildet und so eine wirkungsvolle Fixierung der zu verbindenden Teile hervorruft. Hier muß jedoch gewährleistet sein, daß die zunehmende Wanddicke eine manuelle Betätigung der erfindungsgemäßen Vorrichtung zuläßt.

Um nun die zur Ausbildung des Schließkopfes erforderliche Zugkraft zu verringern und somit auch ein Abreißen des Betätigungsorgangs wirksam zu vermeiden, könnte die Wandung des Bolzens Längsnuten oder längs verlaufende Ausnehmungen oder Aussparungen aufnehmen. Hierdurch wäre eine Schwächung der Wandung des Bolzens gegeben, so daß sich dieser - partiell - mühelos aufweiten läßt. Hier ist jedenfalls wesentlich, daß die durch die Aufweitung erzielte Wirkung - Ausbildung des Schließkopfes - nahezu unbeeinträchtigt ist, eine Materialschwächung jedoch die Ausbildung des Schließkopfes erleichtert.

Im Vorfelde einer Ausbildung des Schließkopfes wäre es von ganz erheblichem Vorteil, wenn sich die Vorrichtung bzw. der Bolzen nach Hindurchstecken durch die Durchgänge der zu verbindenden Teile bereits fixieren ließe. Dazu könnte die Außenwandung des Bolzens zum Festlegen bzw. Fixieren dienende, vorzugsweise längs verlaufende Stege oder dgl. aufweisen. Diese Stege würden sich bereits vor der eigentlichen Fixierung in das Material der zu verbindenden Teile hineindrücken oder umgekehrt, so daß zumindest gewissermaßen eine Sicherung gegen ungewolltes Herausfallen bzw. Herausziehen oder ungewolltes Drehen innerhalb der Durchgänge realisiert ist.

Nun könnte die erfindungsgemäße Vorrichtung im Rahmen weiterer Ausgestaltungsmöglichkeiten Mittel zur multifunktionalen Verwendung aufweisen, so beispielsweise Mittel zum Anschließen jedweder Funktionselemente, die vorzugsweise an der Außenwandung des Bolzens vorgesehen sind. So könnte an der Außenwandung des Bolzens ein Gewinde ausgebildet sein oder der Bolzen bzw. die Außenwandung des Bolzens könnte im Sinne eines Hakens geformt sein. Eine solche Ausgestaltung ist insbesondere dann von besonderem Vorteil, wenn die Vorrichtung beispielsweise durch eine dünne Wand hindurch zur Fixierung eines flächigen Teils verwendet wird und hinter dieser Wand beispielsweise elektrische Leitungen zu halten sind. So könnte der durch die Wand hindurchragende Bolzen beispielsweise auch zum Anbringen von Kabelschellen oder dgl. dienen.

Ebenso könnte der Setzkopf des Bolzens, d.h. das vordere Ende, Mittel zum Anschließen jedweder Funktionselemente aufweisen. Hier gilt grundsätzlich das gleiche wie beim hinteren Ende des Bolzens, so daß sich weitere Ausführungen hierzu erübrigen.

Hinsichtlich einer materialmäßigen Ausgestaltung der erfindungsgemäßen Vorrichtung ist es von ganz besonderem Vorteil, wenn der Bolzen und ggf. das Betätigungsorgan aus einem vorzugsweise weichen Kunststoff gefertigt sind. Somit wäre die Möglichkeit einer manuellen Betätigung bzw. Ausbildung des Schließkopfes auf jeden Fall gegeben. In weiter vorteilhafter Weise könnte es sich bei dem Kunststoff um einen kaltverfestigbaren Kunststoff handeln, d.h. um einen Kunststoff, der sich nach Ausbildung des Schließkopfes nur noch unter Aufbringung wesentlich höherer Kräfte verformen und beispielsweise in seinen ursprünglichen Zustand zurückführen läßt. Auch insoweit wäre eine besonders wirksame Verbindung gewährleistet.

Abschließend sei darauf hingewiesen, daß die beanspruchte Vorrichtung im Sinne eines Blindniet verwendet werden kann. Ebenso wäre es jedoch denkbar, die beanspruchte Vorrichtung als Verschluß oder Siegel zu verwenden, beispielsweise als Verschluß oder Siegel einer Verkaufspackung, wobei die irreversibel betätigte Vorrichtung dem Käufer garantiert, daß die Packung noch nicht geöffnet wurde.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung zweier Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigt
- Fig. 1: in einer schematischen Darstellung, geschnitten, ein erstes Ausführungsbeispiel einer erfindungsgemäßen Vorrichtung,
- Fig. 2: den Gegenstand aus Fig. 1 im betätigten Zustand und
- Fig. 3: ein zweites Ausführungsbeispiel einer erfindungsgemäßen Vorrichtung, wobei das hintere Ende des Bolzens aus Vollmaterial gebildet ist.

Die Figuren zeigen gemeinsam eine Vorrichtung zum Verbinden flächiger Teile 1, 2, wobei die Vorrichtung im Sinne eines Niet ausgeführt ist. Die Vorrichtung weist einen durch in den Teilen 1, 2 ausgebildete Durchgänge hindurchsteckbaren, vorzugsweise als zylindrischen Hohlkörper ausgeführten Bolzen 3 und einen an einem Ende des Bolzens 3 ausgebildeten, zur Anlage an das äußere Teil l dienenden Setzkopf 4 auf, wobei der Bolzen 3 zumindest in gewissem Maße elastisch und ansonsten plastisch verformbar ist.

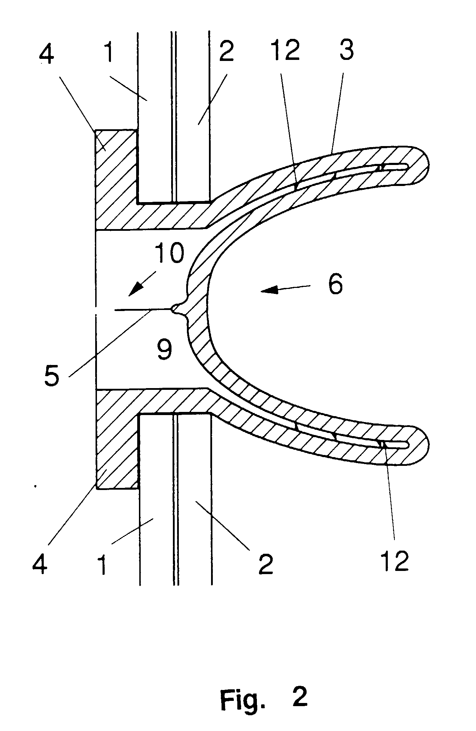

In erfindungsgemäßer Weise ist ein am hinteren Ende des Bolzens 3 festgelegtes Betätigungsorgan 5 vorgesehen, welches sich durch den Bolzen 3 und den Setzkopf 4 hindurch nach außen erstreckt. Durch Herausziehen des Betätigungsorgans 5 läßt sich das dem Setzkopf 4 abgewandte hintere Ende 6 in den Bolzen 3 hineinziehen, wodurch der Bolzen 3 aufweitbar bzw. ein Schließkopf 7 bildbar ist. Dazu wird auf die schematische Darstellung in Fig. 2 verwiesen.

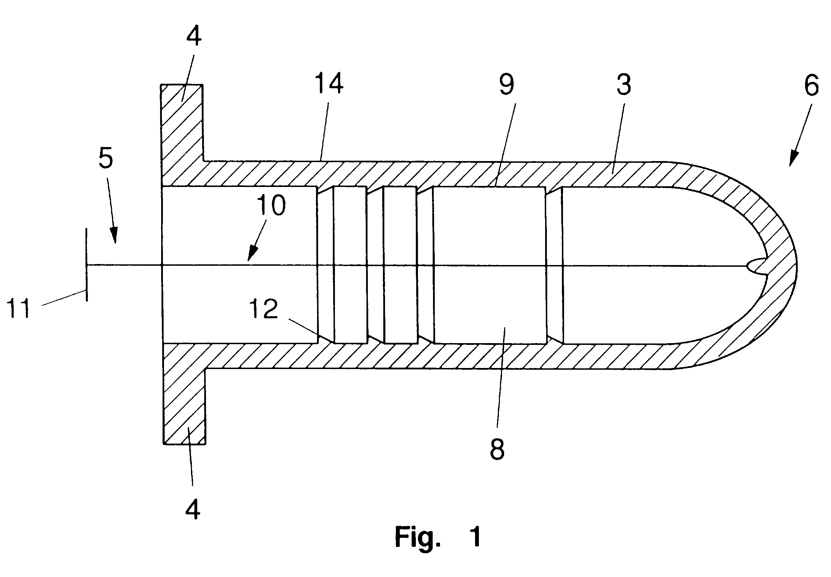

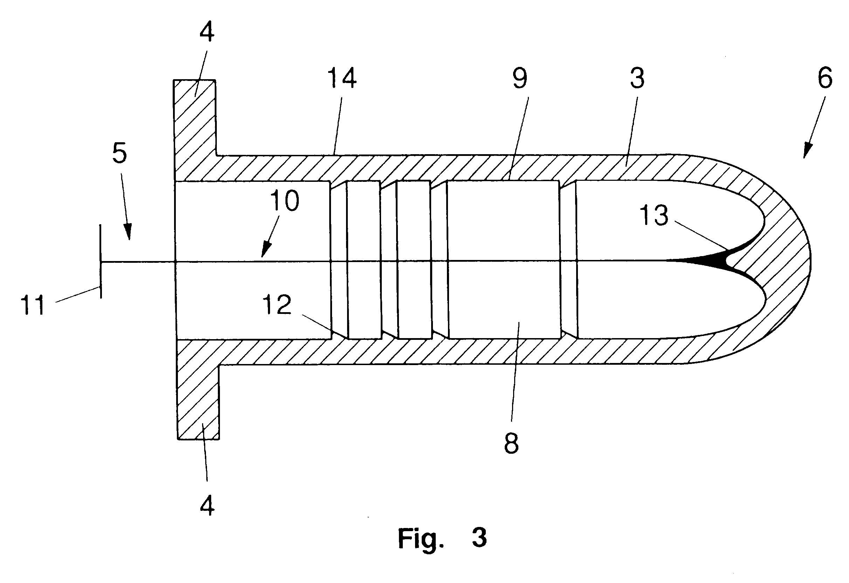

Die Fig. 1 und 3 zeigen deutlich, daß sich das Betätigungsorgan 5 frei beweglich durch den Bolzen 3 und den Setzkopf 4 hindurch erstreckt.

Der Bolzen 3 ist derart dimensioniert, daß das Betätigungsorgan 5 manuell - ohne weitere Werkzeuge - betätigbar bzw. herausziehbar ist. Bei dem in den Figuren gewählten Ausführungsbeispielen ist der Bolzen 3 am hinteren Ende 6 geschlossen und das Betätigungsorgan 5 dort etwa mittig festgelegt. Die Figuren zeigen dabei deutlich, daß der innerhalb des Bolzens 3 ausgebildete, sich zum hinteren Ende 6 erstreckende Raum 8 im Sinne eines Sackloches bzw. einer Sackbohrung ausgebildet ist.

Bei den hier gewählten Ausführungsbeispielen ist das Betätigungsorgan 5 integraler Bestandteil des Bolzens 3 und ist demnach aus dem gleichen Material wie der Bolzen 3 gefertigt, nämlich aus einem relativ weichen Kunststoff. Zur Verstärkung des Betätigungsorgans könnte dieses im Inneren eine Verstärkung, beispielsweise eine Seele aus Nylon oder Glasfasern, aufweisen.

Des weiteren ist in den Figuren angedeutet, daß sich das Betätigungsorgan 5 von der Innenwandung 9 des Bolzens 3 aus zu einer Art Schnur oder einem vorzugsweise steifen Stab verjüngt. Hier muß lediglich gewährleistet sein, daß das Betätigungsorgan 5 eine hinreichende Festigkeit zum Hineinziehen des hinteren Endes 6 des Bolzens 3 aufweist.

Bei der in Fig. 2 gewählten Darstellung ist das Betätigungsorgan innerhalb des Raumes 8 an einer dort vorgesehenen Sollbruchstelle 10 abgerissen. Die Figur läßt erkennen, daß das Abreißen an der Sollbruchstelle nach Ausbildung des Schließkopfes 7 erfolgt ist, wobei zum Abreißen des Betätigungsorgans 5 eine die zum Einziehen erforderliche Kraft überschreitende Kraft erforderlich ist.

Die Fig. 1 und 3 lassen des weiteren erkennen, daß an dem freien Ende des Betätigungsorgans 5 ein zum Ergreifen dienendes Griffteil 11 ausgebildet ist. Dies ist lediglich symbolisch dargestellt, wobei es sich hier um eine beliebige Ausgestaltung zum Ergreifen mit der ganzen Hand oder mit zwei Fingern handeln kann. Bei dem Griffteil 11 handelt es sich um einen integralen Bestandteil des Betätigungsorgans 5.

Die Figuren lassen des weiteren gemeinsam erkennen, daß an der Innenwandung 9 nach innen abragende Mittel vorgesehen sind, die bei hineingezogenem hinteren Ende 6 eine mechanische Verhakung bzw. ein Einrasten und somit eine stufenweise Festlegung des hineingezogenen Bereichs des Bolzens 3 bewirken. Bei dem hier gewählten Ausführungsbeispiel handelt es sich dabei um umlaufende, nasenartig ausgebildete Vorsprünge 12, die der Einfachheit halber lediglich angedeutet sind. Wesentlich ist hier jedenfalls, daß sich die aneinander liegenden Bereiche der Innenwandung 9 mechanisch verhaken, so daß ein ungewolltes Herausgleiten des hinteren Endes auch bei Druckbelastung weitgehend verhindert ist.

Bei dem in Fig. 3 gewählten zweiten Ausführungsbeispiel endet der innerhalb des Bolzens 3 ausgebildete Raum 8 bereits vor dem hinteren Ende des Bolzens 3, so daß das hintere Ende 6 des Bolzens 3 aus Vollmaterial gebildet ist. Des weiteren weist das hintere Ende 6 des Bolzens 3 einen sich zum Setzkopf 4 hin erstreckenden Spreizkeil 13 auf, der das Hineinziehen des hinteren Endes 6 in den Raum 8 ganz erheblich begünstigt. Dieser Spreizkeil 13 verjüngt sich zu seinem freien Ende hin konisch, bildet somit zur Innenwandung 9 eine Art aufweitende Gleitfläche.

Bei den in den Figuren gewählten Ausführungsbeispielen ist die Wandung des Bolzens 3 gleichbleibend ausgeführt. Ebenso könnte jedoch die Wanddicke bei gleichbleibendem Außendurchmesser zum Setzkopf 4 hin zunehmen, so daß die Aufweitung aufgrund der zunehmenden Wanddicke abermals begünstigt wird. Hier wäre es jedoch ratsam, durch Längsnuten oder längs verlaufende Ausnehmungen Aussparungen vorzunehmen, um die zur Aufweitung erforderliche Kraft nicht unnötig zu erhöhen und eine manuelle Betätigung auch weiterhin zu gewährleisten. Der einfachen Darstellung halber wurde jedoch auf solche Nuten und Ausnehmungen bei den hier gewählten Ausführungsbeispielen verzichtet. Gleiches gilt für zum Festlegen bzw. Fixieren dienende, an der Außenwandung 14 des Bolzens 3 verlaufende Stege.

Hinsichtlich weiterer vorteilhafter Ausgestaltungen, die in den Figuren nicht dargestellt sind, wird zur Vermeidung von Wiederholungen auf die einleitende Beschreibung verwiesen.

Abschließend sei hervorgehoben, daß die zuvor erörterten Ausführungsbeispiele die beanspruchte Lehre nicht einschränken, diese lediglich beispielhaft erläutern.

## Patentansprüche

1. Vorrichtung zum Verbinden flächiger Teile (1, 2), mit einem durch in den Teilen (1, 2) ausgebildete Durchgänge hindurchsteckbaren, im wesentlichen als zylindrischer Hohlkörper ausgeführten Bolzen (3), einem an einem Ende des Bolzens (3) ausgebildeten, zur Anlage an das äußere Teil (1) dienenden Setzkopf (4) und einem am hinteren Ende (6) des Bolzens (3) festgelegten, sich durch den Bolzen (3) und den Setzkopf (4) hindurch nach außen erstreckenden Betätigungsorgan (5), wobei der Bolzen (3) elastisch und/oder plastisch verformbar ist,
**dadurch gekennzeichnet,** daß durch Herausziehen des Betätigungsorgans (5) das dem Setzkopf (4) abgewandte, hintere, Ende (6) nach innen gestülpt in den Bolzen (3) hineinziehbar und dadurch der Bolzen (3) aufweitbar bzw. ein Schließkopf (7) bildbar ist.

2. Vorrichtung nach Anspruch 1, dadurch gekennzeichnet, daß sich das Betätigungsorgan (5) frei beweglich durch den Bolzen (3) und Setzkopf (4) hindurch erstreckt.

3. Vorrichtung nach Anspruch 1 oder 2, dadurch gekennzeichnet, daß der Bolzen (3) derart dimensioniert ist, daß das Betätigungsorgan (5) ohne weitere Werkzeuge betätigbar ist.

4. Vorrichtung nach einem der Ansprüche 1 bis 3, dadurch gekennzeichnet, daß der Bolzen (3) am hinteren Ende (6) geschlossen und das Betätigungsorgan (5) dort etwa mittig festgelegt ist, wobei der innerhalb des Bolzens (3) ausgebildete, sich zum hinteren Ende (6) erstreckende Raum (8) vorzugsweise im Sinne eines Sackloches bzw. einer Sackbohrung ausgebildet ist.

5. Vorrichtung nach einem der Ansprüche 1 bis 4, dadurch gekennzeichnet, daß das Betätigungsorgan (5) form- und/oder kraft- und/oder materialschlüssig bzw. adhäsiv mit dem hinteren Ende (6) des Bolzens (3) verbunden oder integraler Bestandteil des Bolzens (3) ist.

6. Vorrichtung nach einem der Ansprüche 1 bis 5, dadurch gekennzeichnet, daß sich das Betätigungsorgan (5) von der Innenwandung (9) des Bolzens (3) aus zu einem vorzugsweise steifen Stab oder zu einem vorzugsweise biegbaren Band, einer biegbaren Lasche, einer Schnur oder dgl. verjüngt.

7. Vorrichtung nach einem der Ansprüche 1 bis 6, dadurch gekennzeichnet, daß das Betätigungsorgan (5) zumindest im Bereich des Setzkopfes (4) eine aufgerauhte bzw. geriffelte Oberfläche aufweist und im betätigten Zustand mittels einer Plombe oder dgl. im Bereich des Setzkopfes (4) bzw. außerhalb des Bolzens (3) festlegbar ist und daß das Betätigungsorgan (5) im Bereich innerhalb des Bolzens (3) ggf. eine Sollbruchstelle (10) aufweist.

8. Vorrichtung nach einem der Ansprüche 1 bis 7, dadurch gekennzeichnet, daß an dem freien Ende des Betätigungsorgans (5) ein zum Ergreifen dienendes Griffteil (11) ausgebildet ist und daß das Griffteil (11) vorzugsweise integraler Bestandteil des Betätigungsorgans (5) ist.

9. Vorrichtung nach einem der Ansprüche 1 bis 8, dadurch gekennzeichnet, daß an der Innenwandung (9) des Bolzens (3) nach innen abragende Mittel vorgesehen sind, die bei hineingezogenem hinteren Ende (6) eine mechanische Verhakung oder ein Einrasten und eine ggf. stufenweise Festlegung des hineingezogenen Bereichs bewirken, wobei die Mittel als vorzugsweise umlaufende Vorsprünge (12), Nasen, Zähne, Haken oder dgl. ausgebildet sind oder wobei die Innenwandung (9) des Bolzens (3) aufgerauht ist, so daß bei hineingezogenem hinteren Ende (6) der Reibungskoeffizient zwischen einander berührenden Wandungsabschnitten erhöht ist.

10. Vorrichtung nach einem der Ansprüche 1 bis 9, dadurch gekennzeichnet, daß der innerhalb des Bolzens (3) ausgebildete Raum (8) bereits vor dem hinteren Ende (6) des Bolzens (3) endet, so daß das hintere Ende (6) des Bolzens (3) aus Vollmaterial gebildet ist.

11. Vorrichtung nach einem der Ansprüche 1 bis 10, dadurch gekennzeichnet, daß das hintere Ende (6) des Bolzens (3) einen sich zum Setzkopf (4) hin erstreckenden Spreizkeil (13) aufweist, der sich ggf. zu seinem freien Ende hin vorzugsweise konisch verjüngt.

12. Vorrichtung nach einem der Ansprüche 1 bis 11, dadurch gekennzeichnet, daß sich der innerhalb des Bolzens (3) ausgebildete Raum (8) zum Setzkopf (4) hin verjüngt, wobei bei gleichbleibendem Außendurchmesser die Wanddicke zunimmt und wobei die Wandung des Bolzens (3) ggf. Längsnuten oder längs verlaufende Ausnehmungen oder Aussparungen aufweist und wobei die Außenwandung (14) des Bolzens (3) zum Festlegen bzw. Fixieren dienende, vorzugsweise längs verlaufende Stege oder dgl. aufweist.

13. Vorrichtung nach einem der Ansprüche 1 bis 12, dadurch gekennzeichnet, daß die Außenwandung (14) des Bolzens (3) Mittel zum Anschließen von Funktionselementen zur multifunktionalen Verwendung der Vorrichtung aufweist oder im Sinne eines Hakens zum Halten von Gegenständen in dem dem Teil (2) angrenzenden Raumbereich ausgebildet ist und daß an der Außenwandung (14) des Bolzens (3) ggf. ein Gewinde ausgebildet ist.

14. Vorrichtung nach einem der Ansprüche 1 bis 13, dadurch gekennzeichnet, daß der Setzkopf (4) des Bolzens (3) Mittel zum Anschließen von Funktionselementen zur multifunktionalen Verwendung der Vorrichtung aufweist.

15. Vorrichtung nach einem der Ansprüche 1 bis 14, dadurch gekennzeichnet, daß der Bolzen (3) und ggf. das Betätigungsorgan (5) aus einem vorzugsweise weichen Kunststoff gefertigt sind, wobei der Kunststoff vorzugsweise kaltverfestigbar ist.

## Claims

1. Device for connecting two-dimensional parts (1, 2) with a bolt (3) substantially in the form of a cylindrical hollow piece that can be inserted through passages in the parts (1, 2), a sethead (4) formed at one end of the bolt (3) for application to the outer part (1) and an actuating mechanism (5) situated at the rear end (6) of the bolt (3) and extending through the bolt (3) and the sethead (4) to the outside, the bolt (3) being elastically and/or plastically deformable,
characterised in that by withdrawing the actuating mechanism (5) the rear end (6) facing away from the sethead (4) can be pulled into the bolt (3) in reverse and as a result the bolt (3) can expand and/or a closing head (7) can be formed.

2. Device according to Claim 1 characterised in that the actuating mechanism (5) extends freely movably through the bolt (3) and sethead (4).

3. Device according to Claim 1 or 2 characterised in that the bolt (3) is dimensioned such that the actuating mechanism (5) can be operated without further tools.

4. Device according to one of Claims 1 to 3,
characterised in that the bolt (3) is closed at the rear end (6) and the actuating mechanism (5) is situated there approximately in the centre, the cavity (8) formed within the bolt (3) and extending to the rear end (6) preferably taking the form of a blind hole or a blind bore.

5. Device according to one of Claims 1 to 4,
characterised in that the connection of the actuating mechanism (5) to the rear end (6) of the bolt (3) is positive and/or non-positive and/or surface locking and/or adhesive or in that the actuating mechanism forms an integral part of the bolt (3).

6. Device according to one of Claims 1 to 5,
characterised in that the actuating mechanism (5) tapers from the inner wall (9) of the bolt (3) to a preferably rigid rod or to a preferably flexible strap, a flexible bracket, a cord or similar.

7. Device according to one of Claims 1 to 6 characterised in that the actuating mechanism (5) has a raised or corrugated surface at least in the region of the sethead (4) and can be set in the actuated condition by a lead seal or similar in the region of the sethead (4) or outside the bolt (3) and in that the actuating mechanism (5) optionally has a designated breaking point (10) in the region within the bolt (3).

8. Device according to one of Claims 1 to 7 characterised in that a grip (11) for gripping is formed at the free end of the actuating mechanism (5) and in that the grip (11) is preferably an integral part of the actuating mechanism (5).

9. Device according to one of Claims 1 to 8,
characterised in that inward projecting means are provided on the inner wall (9) of the bolt (3) which, when the rear end (6) is drawn in, effect a mechanical interlocking or an engagement and optionally a stepwise setting of the drawn-in region, the means preferably taking the form of circumferential projections (12), catches, teeth, hooks or similar or the inner wall (9) of the bolt (3) being raised so that, when the rear end (6) is drawn in, the friction coefficient between wall sections in contact with one another is increased.

10. Device according to one of Claims 1 to 9,
characterised in that the cavity (8) formed within the bolt (3) ends before the rear end (6) of the bolt (3), so that the rear end (6) of the bolt (3) is formed of solid material.

11. Device according to one of Claims 1 to 10
characterised in that the rear end (6) of the bolt (3) has an expanding wedge (13) extending to the sethead (4) which optionally tapers to its free end, preferably conically.

12. Device according to one of Claims 1 to 11
characterised in that the cavity (8) formed within the bolt (3) tapers towards the sethead (4), the wall thickness increasing with the outer diameter remaining the same and the wall of the bolt (3) optionally having longitudinal grooves or longitudinally running recesses or openings and the outer wall (14) of the bolt (3) having preferably longitudinally running flanges or similar for the purposes of setting and/or fixing.

13. Device according to one of Claims 1 to 12
characterised in that the outer wall (14) of the bolt (3) has means for connecting function elements for multifunctional use of the device or takes the form of a hook for holding articles in the spatial region adjacent to the part (2) and in that optionally a thread is formed on the outer wall (14) of the bolt (3).

14. Device according to one of Claims 1 to 13
characterised in that the sethead (4) of the bolt (3) has means for connecting function elements for multifunctional use of the device.

15. Device according to one of Claims 1 to 14
characterised in that the bolt (3) and optionally the actuating mechanism (5) are made of a preferably soft plastic, the plastic preferably being work-hardening.

## Revendications

1. Dispositif pour l'assemblage de pièces plates (1, 2), avec une cheville (3) ayant en substance la forme d'un corps creux pouvant passer au travers des passages pratiqués dans les pièces (1, 2), la cheville (3) étant dotée d'une tête d'application (4) formée à une extrémité de la cheville (3) et servant à l'application contre la pièce extérieure (1) ainsi que d'un organe d'actionnement (5) fixée à l'extrémité postérieure (6) de la cheville (3) et passant à travers la cheville (3) et à travers la tête d'application (4) vers l'extérieur, la cheville (3) pouvant être déformée élastiquement et/ou plastiquement,
caractérisé par lors du retrait de l'organe d'actionnement (5), l'extrémité postérieure (6) de la cheville, à savoir celle qui est éloignée de la tête d'application (4) peut être, à l'état retroussé vers l'intérieur, tirée vers l'intérieur de la cheville (3) de sorte que la cheville (3) peut être élargie ou que peut être formée une tête d'obturation (7).

2. Dispositif suivant la revendication 1, caractérisé en ce que l'organe d'actionnement (5) passe de manière librement mobile au travers de la cheville (3) et la tête d'application (4).

3. Dispositif suivant la revendication 1 ou 2, caractérisé en ce que la cheville (3) est dimensionnée de manière telle que l'organe d'actionnement (5) peut être manoeuvré sans l'aide d'outils supplémentaires.

4. Dispositif suivant l'une quelconque des revendications de 1 à 3, caractérisé en ce que la cheville (3) est fermée à son extrémité postérieure (6) et en ce que l'organe d'actionnement (5) y est fixé sensiblement au milieu, l'enceinte (12) située à l'intérieur de la cheville (3) et s'étendant vers l'extrémité postérieure (6) ayant de préférence la forme d'un trou ou d'une forure en cul-de-sac.

5. Dispositif suivant l'une quelconque des revendications de 1 à 4, caractérisé en ce que l'organe d'actionnement (5) est relié par similarité et/ou par voie mécanique et/ou par solidarité matérielle ou par adhésion à l'extrémité postérieure (6) de la cheville (3) ou fait partie intégrante de la cheville (3).

6. Dispositif suivant l'une quelconque des revendications de 1 à 5, caractérisé en ce que l'organe d'actionnement (5) s'amincit depuis la paroi intérieure (9) de la cheville (3) en une baguette de préférence rigide ou en un ruban de préférence flexible, en une patte flexible, en une nervure ou similaire.

7. Dispositif suivant l'une quelconque des revendications de 1 à 6, caractérisé en ce que l'organe d'actionnement (5) présente, tout au moins dans la région de la tête d'application (4), une surface rugueuse ou striée et en ce qu'à l'état de fonctionnement, il peut être verrouillé au moyen d'un plomb ou similaire dans la région de la tête d'application (4) ou en dehors de la cheville (3), et en ce que dans la région de la cheville, l'organe d'actionnement (5) présente le cas échéant une zone de rupture de consigne (10).

8. Dispositif suivant l'une quelconque des revendications de 1 à 7, caractérisé en ce qu'à l'extrémité libre de l'organe d'actionnement (5), il est formé un élément de poignée (11) servant à la saisie et en ce que l'élément de poignée (11) fait de préférence partie intégrante de l'organe d'actionnement (5).

9. Dispositif suivant l'une quelconque des revendications de 1 à 8, caractérisé en ce que sur la paroi intérieure (9) de la cheville (3) sont prévus des moyens faisant protubérance vers l'intérieur, qui lorsque l'extrémité postérieure (6) est tirée vers l'intérieur produisent l'accrochage mécanique ou un encliquetage et un blocage éventuellement progressif de la zone tirée vers l'intérieur, les moyens ayant la forme de préférence de protubérances périphériques (12), de cames, de dents, de crochets ou similaires ou en ce que la paroi intérieure (9) de la cheville (3) est rendue rugueuse, de telle sorte que lorsque l'extrémité postérieure (6) est tirée vers l'intérieur, le coefficient de friction entre les tronçons de paroi en contact est augmenté.

10. Dispositif suivant l'une quelconque des revendications de 1 à 9, caractérisé en ce que l'enceinte (8) formée au sein de la cheville (3) se termine déjà devant l'extrémité postérieure (6) de la cheville (3), de sorte que l'extrémité postérieure (6) de la cheville (3) est en matériau plein.

11. Dispositif suivant l'une quelconque des revendications de 1 à 10, caractérisé en ce que l'extrémité postérieure (6) de la cheville (3) présente un coin d'écartement (13) s'étendant vers la tête d'application (4) qui le cas échéant s'amincit en cône en direction de son extrémité libre.

12. Dispositif suivant l'une quelconque des revendications de 1 à 11, caractérisé en ce que l'enceinte (8) formée au sein de la cheville (3) est diminuée en direction de la tête d'application (4), l'épaisseur de la paroi allant en augmentant avec un diamètre extérieur constant, la paroi de la cheville (3) présentant le cas échéant des rainures longitudinales ou des évidements ou creux disposés longitudinalement, la paroi extérieure (14) de la cheville (3) présentant des nervures ou similaires orientées longitudinalement et servant au blocage ou à la fixation.

13. Dispositif suivant l'une quelconque des revendications de 1 à 12, caractérisé en ce que la paroi extérieure (14) de la cheville (3) présente des moyens pour le raccordement d'éléments fonctionnels aux fins de l'utilisation multifonctionnelle du dispositif ou bien présente, dans la zone voisine de la pièce (2), la forme d'un crochet pour accrocher des objets et en ce que la paroi extérieure (14) de la cheville est le cas échéant filetée.

14. Dispositif suivant l'une quelconque des revendications de 1 à 13, caractérisé en ce que la tête d'application (4) de la cheville (3) présente des moyens pour le raccordement d'éléments fonctionnels en vue d'une utilisation multifonctionnelle du dispositif.

15. Dispositif suivant l'une quelconque des revendications de 1 à 14, caractérisé en ce que la cheville (3) et le cas échéant l'organe d'actionnement (5) sont fabriqués en une matière plastique de préférence souple, la matière plastique pouvant de préférence être renforcée à froid.
